# EUROPEAN PATENT APPLICATION

(11) **EP 4 400 189 A1**
(43) Date of publication of application: **17.07.2024**
(21) Application number: 23216643.9
(22) Date of filing: 14.12.2023
(51) Int. Cl.: B01D 15/16, B01D 15/42, B01J 20/10, B01J 20/28, B01J 20/283, B01J 20/32, G01N 30/02, A61K 47/10

(54) **CHROMATOGRAPHY COLUMN FOR THE SEPARATION OF SURFACTANTS**

(30) Priority: 12.01.2023 US 202363479585 P; 07.11.2023 US 202318503722
(71) Applicant: Agilent Technologies, Inc., Santa Clara, CA 95051 (US)
(72) Inventor: LONG, David, Santa Clara, CA, 95051 (US); HE, Chenchen, Santa Clara, CA, 95051 (US); KONDAVEETI, Sandeep, Santa Clara, CA, 95051 (US); WEI, Ta-Chen, Santa Clara, CA, 95051 (US); MCQUAY, Amanda, Santa Clara, CA, 95051 (US)
(74) Representative: Grünecker Patent- und Rechtsanwälte PartG mbB

(57) **Abstract**

A chromatographic separation column for characterizing surfactant purity is disclosed. The column includes a separation medium having a particulate porous substrate with monofunctional silane with diisopropyl side chain groups and a pendant cyano functional group held within a column. The porous substrate has a pore size of about 50 Å to about 500 Å and an average particle size of about 1.0 µm to about 100 µm. The column has an inner diameter of about 1.0 to 100 mm, e.g., 4.6 mm and a length from about 10 mm to about 250 mm. Methods of facilitating characterization of polysorbate 80 by providing a sample containing polysorbate 80 and one or more reaction products of polysorbate 80 and a chromatographic separation column are disclosed. Methods of characterizing polysorbate 80 by separating polysorbate 80 and one or more reaction products of polysorbate 80 are also disclosed.

## Description

### CROSS-REFERNCE TO RELATED APPLICATIONS

This application claims priority to U.S. Patent Application No. 63/479,585, filed January 12, 2023, the entire contents of which are incorporated herein by reference in their entirety.

### FIELD OF TECHNOLOGY

Aspects and embodiments disclosed herein are generally related to columns for the detection and separation of surfactants, such as polysorbates, in pharmaceutical products.

### SUMMARY

In accordance with an aspect, there is provided a chromatographic separation column for characterizing surfactant purity. The chromatographic separation column may include a separation medium including a particulate porous substrate having a monofunctional silane with diisopropyl side chain groups and a pendant cyano functional group. The porous substrate may have a pore size of about 50 to about 500 Å and an average particle size of about 1.0 µm to about 100 µm. The chromatographic separation column may also include a column constructed and arranged to hold the separation medium. The column may have an inner diameter of about 1.0 to 100 mm and a length from about 10 mm to about 250 mm.

In some embodiments, the surfactant to be characterized may include a non-ionic surfactant. In some embodiments, the non-ionic surfactant may include a polysorbate. In certain embodiments, the polysorbate may be polysorbate 80.

In some embodiments, the porous substrate may be a hydrated metal oxide, a hydrated metalloid-oxide, or organic polymer. In specific embodiments, the porous substrate may be silica, e.g., silica particles, e.g., silica particles with a silanol surface.

In some embodiments, the porous substrate may have a particle size of about 3.5 µm. In some embodiments, the porous substrate may have a pore size of about 300 Å.

In some embodiments, the inner diameter of the column may be 2.1 mm. In some embodiments, the length of the column may be about 50 mm to about 150 mm. In some embodiments, the length of the column may be about 50 mm. In some embodiments, the length of the column may be about 100 mm. In some embodiments, the length of the column may be about 150 mm.

In some embodiments, the separation medium can resist degradation over a pH range from 1.0 to 8.0. In certain embodiments, the separation medium can be used in a temperature range of about 20 to 80 °C.

In some embodiments, the column can be used at an operating pressure up to about 400 bar.

In accordance with an aspect, there is provided a method of facilitating characterization of polysorbate 80. The method may include providing a sample including polysorbate 80 and one or more reaction products of polysorbate 80. The method may also include providing a chromatographic separation column. The chromatographic separation column may include a separation medium including a particulate porous substrate having a monofunctional silane with diisopropyl side chain groups and a pendant cyano functional group. The porous substrate may have a pore size of about 50 to about 500 Å and an average particle size of about 1.0 µm to about 100 µm. The chromatographic separation column may also include a column constructed and arranged to hold the separation medium. The column may have an inner diameter of about 1.0 to 100 mm and a length from about 10 mm to about 250 mm.

In some embodiments, the porous substrate of the provided chromatographic separation column may include silica. In some embodiments, the porous substrate of the provided chromatographic separation column may have a particle size of about 3.5 µm. In some embodiments, the porous substrate of the provided chromatographic separation column may have a pore size of about 300 Å.

In some embodiments, the inner diameter of the provided chromatographic separation column method may be about 2.1 mm. In some embodiments, the length of the column may be about 50 mm to about 150 mm. In some embodiments, the length of the provided chromatographic separation column may be about 50 mm. In some embodiments, the length of the provided chromatographic separation column may be about 100 mm. In some embodiments, the length of the provided chromatographic separation column may be about 150 mm.

In some embodiments, the one or more reaction products of polysorbate 80 in the sample may include one or more of long chain fatty acids, short chain fatty acids, polyoxyethylene, polyoxyethylene sorbitan, aldehydes, ketones, formic acid, acetic acid, and peroxides.

In further embodiments, the method may include installing the chromatographic separation column into a liquid chromatographic instrument.

In further embodiments, the method may include providing a mobile phase to effectuate separation of the polysorbate 80 and the one or more reaction products of polysorbate 80. The mobile phase may include one or more of ammonium acetate, ammonium formate, ammonia, formic acid, acetic acid, trifluoroacetic acid, methanol, isopropanol, acetonitrile, ethanol, and acetone. For example, in specific embodiments, the mobile phase may include one or both of ammonium acetate, e.g., 10 mM ammonium acetate, and methanol. In further embodiments, the mobile phase may include, for example, one or both of trifluoroacetic acid (TFA), e.g., TFA in water, e.g., 0.1% TFA in water, and methanol.

In further embodiments, the method may include providing instructions for a gradient-based separation using the mobile phase.

In accordance with an aspect, there is provided a chromatographic separation column for the characterization of surfactants, e.g., polysorbate 80. The chromatographic separation column may include a separation medium including a particulate porous substrate having a monofunctional silane with diisopropyl side chain groups and a pendant cyano functional group. The porous substrate may have a pore size of about 300 Å and an average particle size of about 3.5 µm. The chromatographic separation column also may include a column constructed and arranged to hold the separation medium. The column may have an inner diameter of about 2.1 mm and a length of about 50 mm to about 150 mm. In some embodiments, the length of the column may be about 50. In some embodiments, the column may have an inner diameter of about 2.1 mm and a length of about 100 mm. In some embodiments, the column may have an inner diameter of about 2.1 mm and a length of about 150 mm.

In some embodiments, the surfactant to be characterized may include a non-ionic surfactant. In some embodiments, the non-ionic surfactant may include a polysorbate. In certain embodiments, the polysorbate may be polysorbate 80.

In accordance with an aspect, there is provided a method of characterizing polysorbate 80. The method may include preparing a sample comprising polysorbate 80 and one or more reaction products of polysorbate 80. The method may include injecting the sample into a chromatographic separation column. The chromatographic separation column may include a separation medium including a particulate porous substrate having a monofunctional silane with diisopropyl side chain groups and a pendant cyano functional group. The porous substrate may have a pore size of about 50 Å to about 500 Å and an average particle size of about 1.0 µm to about 100 µm. The column may have an inner diameter of about 1.0 mm to about 100 mm and a length from about 10 mm to about 250 mm. The method further may include eluting the polysorbate 80 and the one or more reaction products of polysorbate 80 using a gradient mobile phase such that the polysorbate 80 and the one or more reaction products of polysorbate 80 are resolved with a resolution of at least three.

In certain embodiments, the polysorbate 80 and the one or more reaction products of polysorbate 80 are resolved with a resolution of at least five.

In some embodiments, the particulate porous substrate has a pore size of about 300 Å and an average particle size of about 3.5 µm. In some embodiments, the column has an inner diameter of about 2.1 mm and a length of about 50 mm. In some embodiments, the column has an inner diameter of about 2.1 mm and a length of about 100 mm. In some embodiments, the column has an inner diameter of about 2.1 mm and a length of about 150 mm.

In some embodiments, the gradient mobile phase comprises ammonium acetate, e.g., 10 mM ammonium acetate, and methanol.

In some embodiments, the elution of the polysorbate 80 and the one or more reaction products of polysorbate 80 occurs in less than 10 minutes.

### BRIEF DESCRIPTION OF THE DRAWINGS

The accompanying drawings are not drawn to scale. In the drawings, each identical or nearly identical component that is illustrated in the various figures is represented by a like numeral. For purposes of clarity, not every component may be labeled in every drawing. In the drawings:
FIGS. 1A-1B illustrate porous particle morphologies of a separation medium, according to an embodiment. FIG. 1A illustrates a fully porous particle. FIG. 1B illustrates a particle with a solid core and porous shell.
FIG. 2 illustrates a chromatographic separation column, according to an embodiment.
FIG. 3 illustrates a scanning electron microscopy (SEM) image of 1.8 µm 300 Å media particles after functionalization with a diisopropyl cyanopropylsilane.
FIG. 4 illustrates a SEM image of 2.7 µm 120 Å core-shell media particles after functionalization with a diisopropyl cyanopropylsilane.
FIGS. 5A-5B illustrate chromatograms showing the effects of buffer selection on separation of a sample containing oleic acid and polysorbate 80 esters. FIG. 5A illustrates a chromatogram for a 0.1% TFA in water buffer. FIG. 5B illustrates a chromatogram for a 10 mM ammonium acetate buffer.
FIGS. 6A-6B illustrate chromatograms showing the effects of separation medium pore size on separation of a sample containing oleic acid and polysorbate 80 esters. FIG. 6A illustrates a chromatogram for separation medium having 80 Å pores. FIG. 6B illustrates a chromatogram for separation medium having 300 Å pores.
FIGS. 7A-7B illustrate chromatograms showing the effects of separation medium particle size on separation of a sample containing oleic acid and polysorbate 80 esters. FIG. 7A illustrates a chromatogram for separation medium having 3.5 µm diameter particles. FIG. 7B illustrates a chromatogram for separation medium having 1.8 µm diameter particles.
FIGS. 8A-8B illustrate chromatograms showing the effects of chromatography column length on separation of a sample containing oleic acid and polysorbate 80 esters. FIG. 8A illustrates a chromatogram for a 50 mm long chromatography column. FIG. 8B illustrates a chromatogram for a 150 mm long chromatography column.
FIGS. 9A-9B illustrate chromatograms showing the effects of separation medium particle type on separation of a sample containing oleic acid and polysorbate 80 esters. FIG. 9A illustrates a chromatogram for separation medium having 2.7 µm diameter core-shell particles. FIG. 9B illustrates a chromatogram for separation medium having 1.9 µm diameter core-shell particles.

### DETAILED DESCRIPTION

Polysorbates are commonly used non-ionic surfactants in both food and biopharmaceutical products that are derived from ethoxylated sorbitan or isosorbide and esterified with long chain fatty acids. In biopharmaceutical products, polysorbates are typically used to prevent protein adsorption to surfaces, aggregation, and particle formation. These compounds are known to inhibit interfacial damage of the protein molecule as it undergoes mechanical stress either during the drugs manufacture, shipping, or storage. The popularity of polysorbates for pharmaceutical applications is mainly due to their favorable biocompatibility, low toxicity, and effective stabilization of proteins. Polyoxyethylene sorbitan monooleate (PS80), the most common polysorbate used in the commercial market, is a viscous, water-soluble yellow liquid derived from polyethoxylated sorbitan and oleic acid where the hydrophilic groups are composed of polyoxyethylene sidechains. Commercially available PS80 is heterogenous, with the most common process related subspecies being polyoxyethylene (POE) groups, POE isosorbide monoester, and POE sorbitan/isosorbide di-, tri-, and tetra-esters.

Commercially available PS80 and PS20 are highly complex chemical mixtures. Due to the industrial manufacturing process, commercially available polysorbates are composed of a crude mixture of structurally related molecules. The expected structure for PS80 (polyoxyethylene (80) sorbitan monooleate) and PS20 (polyoxyethylene (20) sorbitan monolaurate) will often only account for approximately 30% of the total material. This extreme heterogeneity arises from a combination of process-related impurities, lot-to-lot variability from specific vendors, utilization of different synthetic routes and raw materials, and varying levels of byproducts. In addition to their inherent heterogeneity, polysorbates are also known to degrade through multiple oxidation and hydrolysis pathways which further adds to their complexity through the formation of multiple degradation products. Polysorbates are known to degrade via autooxidation mechanisms, and by chemical or enzymatically facilitated hydrolysis.

Oxidation of polysorbates can be accelerated by light, elevated temperature, or various transition metals giving rise to PEG esters and degradants like alkanes, ketones, aldehydes, and acids. During exposure to light, aqueous solutions of polysorbate 80 undergoes autoxidation of the pendant polyoxyethylene chain which leads to the generation of peroxide derivatives. These peroxides can then induce oxidative damage to any protein molecule making up the formulation and reduce its effectiveness. Polysorbate hydrolysis occurs at extreme pH (base or acid catalyzed) and can also be facilitated by host-cell derived enzymes. Polysorbate hydrolysis leads to cleavage of the fatty acid ester bond, producing a free fatty acid and hydrophilic species such as PEG, PEG sorbitan, and PEG isosorbide. During long-term storage, polysorbate hydrolysis can also result in the accumulation of free fatty acids which ultimately precipitate out as particles of the compound in the drug formulation and interfere with the performance of the product. However, there are concerns that the downstream oxidative degradation products of polysorbates, e.g., long chain fatty acids, short chain fatty acids, polyoxyethylene, polyoxyethylene sorbitan, aldehydes, ketones, formic acid, acetic acid, peroxides, and other reactive oxidative species, can affect overall therapeutic stability and efficacy and further may cause issues when used in parenteral formulations, e.g., injection site irritation. Because of this use, great interest lies in the development of analytical methods to monitor the integrity of polysorbates, specifically polysorbate 80 given its pervasive use.

Characterization of polysorbates, e.g., polysorbate 80, has been challenging. Presently available chromatographic separation methods typically involve long run times in order to improve resolution (and subsequent identification) of the different products and have complicated sample preparation procedures. Attempts to reduce the analysis time by the use of faster flow through existing columns, shorter columns, increased operating pressure, and smaller particle sizes of column stationary phases have resulted in the loss of resolution of two key polysorbate 80 species, oleic acid, which is the main hydrolysis product of polysorbate 80, and the primary ester of polysorbate 80, the mono-ester form, along with other esters and degradants. Thus, the development of suitable separation chemistries and analytical methods employing said chemistries in an important problem in pharmaceutical product development. And accordingly, there is a need to provide improved separation substrates and detection methods for polysorbates which address the deficiencies detailed above and/or which can detect intact polysorbate and/or degraded polysorbate products.

In accordance with an aspect, this disclosure provides a chromatography column including a separation medium, i.e., a substrate, having a combination of physical and chemical properties that permit the characterization of surfactant products, e.g., as a measure of surfactant purity. For example, the chromatographic separation column disclosed herein can separate the reaction, e.g., hydrolysis or oxidation, products and esters of complex non-ionic surfactants such as polysorbate 80 with increased resolution and speed compared to existing separation technologies. The separation medium generally includes a substrate having a covalently attached a monofunctional silane containing a single sterically-protecting group attached to the silicon atom of the silane. The substrate may include a particulate hydrated metal oxide, metalloid oxide, or a solid organic polymer substrate. For example, the separation medium may be a separation medium described in US 4,847,159, US 4,874,518, US 5,032,266, and US 5,108,595, the disclosures of each are herein incorporated by reference in their entirety for all purposes.

As disclosed herein, the substrate of this invention is a solid material for use as a support for one or more functionalization reactions. In an embodiment it can be a metal-oxide or metalloid oxide, e.g., silicon oxide, chromium oxide, and tin oxide. Alternatively, the substrate can be an organic polymer or plastic which will flow under a definite, applied stress. Generally, the substrate is stable across a range of temperatures, e.g., about from 0 to 150° C. In some embodiments, the substrate is stable at temperatures greater than 200° C. The substrate may be a particulate material, e.g., a microparticle or nanoparticle. In some embodiments, the substrate may be a composite material. For example, the substrate may be one type of oxide material that is coated by a metal- or metalloid-oxide film that can be further modified to improve reactivity. As a non-limiting example, titania can be coated with a thin film of silica which can then be hydrolyzed and reacted as disclosed herein.

The size of the particles in the separation medium may be adjusted based on the physical or chemical properties, e.g., size, polarity, etc., of the molecule or molecules being separated within a sample. Without wishing to be bound by any particular theory, the size of the particles in the separation medium can be chosen to optimize the separation of molecules of a certain size range, to adjust the surface area of the separation medium for specific sample types, or to specify a range of operation conditions, i.e., solvent flow rates and pressures, when installed in a liquid chromatography instrument. Smaller particles, e.g., particles having a diameter, less than 100 µm, e.g., particles having a diameter of less than 5 µm, e.g., particles having a diameter of 3.5 µm, can provide a shorter diffusion path for analytes and thus improve one or both of separation efficiency and resolution.

In some embodiments, the particles for the substrate may have a diameter from about 1.0 µm to about 100 µm, e.g., about 1.0 µm to about 10 µm, about 1.2 µm to about 12 µm, about 1.4 µm to about 14 µm, about 1.6 µm to about 16 µm, about 1.8 µm to about 18 µm, about 2.0 µm to about 20 µm, about 2.2 µm to about 22 µm, about 2.4 µm to about 24 µm, about 2.6 µm to about 26 µm, about 2.8 µm to about 28 µm, about 3.0 µm to about 30 µm, about 3.2 µm to about 32 µm, about 3.4 µm to about 34 µm, about 3.6 µm to about 36 µm, about 3.8 µm to about 38 µm, about 4.0 µm to about 40 µm, about 5.2 µm to about 52 µm, about 5.4 µm to about 54 µm, about 5.6 µm to about 56 µm, about 5.8 µm to about 58 µm, about 6.0 µm to about 60 µm, about 6.2 µm to about 62 µm, about 6.4 µm to about 64 µm, about 6.6 µm to about 66 µm, about 6.8 µm to about 68 µm, about 7.0 µm to about 70 µm, about 7.2 µm to about 72 µm, about 7.4 µm to about 74 µm, about 7.6 µm to about 76 µm, about 7.8 µm to about 78 µm, about 8.0 µm to about 80 µm, about 8.2 µm to about 82 µm, about 8.4 µm to about 84 µm, about 8.6 µm to about 86 µm, about 8.8 µm to about 88 µm, about 9.0 µm to about 90 µm, about 9.2 µm to about 92 µm, about 9.4 µm to about 94 µm, about 9.6 µm to about 96 µm, about 9.8 µm to about 98 µm, or about 10.0 µm to about 100 µm.

In some embodiments, the particles for the substrate may have a diameter of about 1.0 µm, about 1.2 µm, about 1.4 µm, about 1.6 µm, about 1.8 µm, about 2.0 µm, about 2.2 µm, about 2.4 µm, about 2.6 µm, about 2.8 µm, 3.0 µm, about 3.2 µm, about 3.4 µm, about 3.6 µm, about 3.8 µm, about 4.0 µm, about 4.2 µm, about 4.4 µm, about 4.6 µm, about 4.8 µm, about 5.0 µm, about 5.2 µm, about 5.4 µm, about 5.6 µm, about 5.8 µm, about 6.0 µm, about 6.2 µm, about 6.4 µm, about6.6 m, about 6.8 µm, about 7.0 µm, about 7.2 µm, about 7.4 µm, about 7.6 µm, about 7.8 µm, about 8.0 µm, about 8.2 µm, about 8.4 µm, about 8.6 µm, about 8.8 µm, about 9.0 µm, about 9.2 µm, about 9.4 µm, about 9.6 µm, about 9.8 µm, about 10 µm, about 12 µm, about 14 µm, about 16 µm, about 18 µm, about 20 µm, about 22 µm, about 24 µm, about 26 µm, about 28 µm, 30 µm, about 32 µm, about 34 µm, about 36 µm, about 38 µm, about 40 µm, about 42 µm, about 44 µm, about 46 µm, about 48 µm, about 50 µm, about 52 µm, about 54 µm, about 56 µm, about 58 µm, about 60 µm, about 62 µm, about 64 µm, about 66 µm, about 68 µm, about 70 µm, about 72 µm, about 74 µm, about 76 µm, about 78 µm, about 80 µm, about 82 µm, about 84 µm, about 86 µm, about 88 µm, about 90 µm, about 92 µm, about 94 µm, about 96 µm, about 98 µm, or about 100 µm. In specific embodiments, the particle size of the substrate is 1.8 µm. In specific embodiments, the particle size of the substrate is 3.5 µm. It has been determined that smaller particle sizes of the separation medium, e.g., 3.5 µm or 1.8 µm, increase the surface area of the separation medium and provide for improved separation, i.e., resolution, of one or more degradation products in a surfactant, e.g., a non-ionic surfactant, e.g., polysorbate 80.

Chromatography columns suitable for polysorbate 80 characterization and analysis, e.g., columns having 1.8 or 3.5 µm particles, need not be only used for polysorbate 80. Other surfactants, e.g., poloxamer 188, i.e., Pluronic F-68, other polysorbates, e.g., polysorbate 20, and Triton X-100, can also be separated using columns having the physical and chemical characteristics disclosed herein. Further, columns having the physical and chemical characteristics disclosed herein can be used for separating biologically relevant samples, such as lipid nanoparticles, e.g., cholesterol, 1,2-dimyristoyl-rac-glycero-3-methoxypolyethylene glycol-2000 (DMP-PEG), distearoylphosphatidylcholine (DSPG), and 1,2-dioleyloxy-3-dimethylaminopropane (DODMA), virus-like particles, e.g., Recombinant Human Papilloma Virus type 16 L1 protein, and viral vectors, e.g., Adeno-Associated Virus Serotype 1 (AAV1).

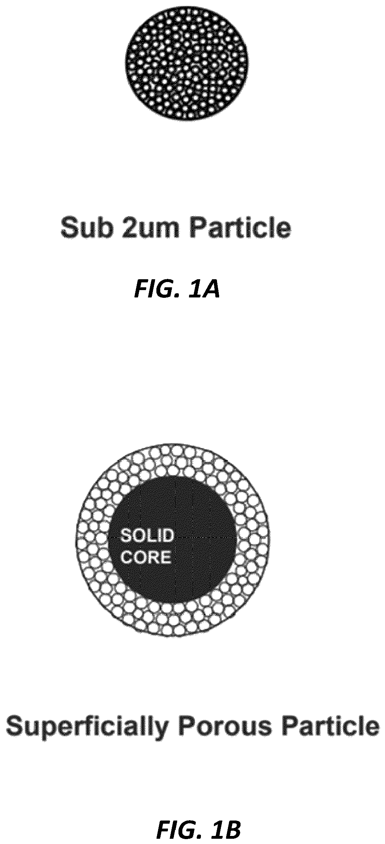

The porous particles used in the separation medium disclosed herein can be fully porous particles or of a core-shell morphology. For example, as illustrated in FIGS. 1A, particles less than 2 µm in diameter, e.g., 1.8 µm, can be fully porous where the entirety of the particle is porous. Alternatively, as illustrated in FIG. 1B, larger particles, i.e., 5 µm and larger, can be of a core-shell morphology where the particle has an inner solid, i.e., nonporous, core and a porous shell permitting liquid flow through the shell. The size of the pores in the porous particles in the separation medium may be chosen based on the physical or chemical properties, e.g., size, polarity, etc., of the molecule or molecules being separated within a sample. Without wishing to be bound by any particular theory, the size of the pores in the porous particles in the separation medium is linearly correlated with the size of the molecule or molecules in a sample to be separated, i.e., larger pores in particles can provide for improved separation of larger molecules in a sample. In some embodiments, the substrate provides for a pore size of about 50 Å to about 500 Å, e.g., about 50 Å to about 150 Å, about 100 Å to about 200 Å, about 150 Å to about 250 Å, about 200 Å to about 300 Å, about 250 Å to about 350 Å, about 300 Å to about 400 Å, about 350 Å to about 450 Å, or about 400 Å to about 500 Å, e.g., about 50 Å, about 60 Å, about 70 Å, about 80 Å, about 90 Å, about 100 Å, about 110 Å, about 120 Å, about 130 Å, about 140 Å, about 150 Å, about 160 Å, about 170 Å, about 180 Å, about 190 Å, about 200 Å, about 210 Å, about 220 Å, about 230 Å, about 240 Å, about 250 Å, about 260 Å, about 270 Å, about 280 Å, about 290 Å, about 300 Å, about 310 Å, about 320 Å, about 330 Å, about 340 Å, about 350 Å, about 360 Å, about 370 Å, about 380 Å, about 390 Å, about 400 Å, about 410 Å, about 420 Å, about 430 Å, about 440 Å, about 450 Å, about 460 Å, about 470 Å, about 480 Å, about 490 Å, or about 500 Å. In specific embodiments, the pore size of the substrate is 300 Å.

As disclosed herein, the substrate may have a surface that will react with one or more functionalization chemistries, e.g., silane reagents. For example, inorganic solids such as silicon oxide, chromium oxide, and tin oxide generally are hydrolyzed such that surface hydroxyl, i.e., - OH, groups will be available for functionalization. Alternatively, the surface of these materials can be modified with other appropriate functional groups that allow for further functionating. For example, the surface of dried silicon oxide particles can be chlorinated with silicon tetrachloride or thionyl chloride. This chlorinated surface can then be reacted with a silane functionalization reagent containing reactive Si-H or Si-OH groups to prepare the substrates for additional reactions to coordinate larger functional groups.

As disclosed herein, the substrate can be functionalized with one or more different chemistries to coordinate functional groups that provide for selectivity for different analytes. One class of functionalization chemistry is by reaction of the substrate surfaces with nonreactive silanes. The silanes used to prepare the substrate are typically monofunctional and include at least one sterically-protecting moiety attached to the silicon atom of the silane. Thus, the silanes embodied in this invention may have the following structure: 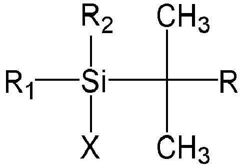 where, X=reactive groups such as chlorine, bromine, iodine, amino, hydroxyl, alkoxy, hydrogen, groups containing --C=C--, etc.; R, R₁ and R₂ are independently alkane, substituted alkane, alkene, substituted alkene, aryl, or substituted aryl, but specifically excluded are structures in which R=R₁=R₂=H, R=R₁=R₂=CH₃, R₁=R₂=H and R=CH₃, R₁=R₂=CH₃, and R=H. For convenience, these silanes are referred to as sterically-protecting silanes. Silanes useful in the present disclosure contain at least one dimethyl substituted, tertiary carbon moiety attached to the silicon atom of the silane. The R group associated with this moiety may be a methyl (simple t-butyl group), but in this case the R₁ group of the silane also must not be a methyl; structures in which R and R₁ are both hydrogen are also specifically excluded. Structures with R=methyl are generally preferred, provided that R₁ is also not methyl. Such structures containing the simple t-butyl group are readily synthesized and are generally effective in sterically protecting the Si-O-bond that attaches the silane to the substrate. The R group can also consist of larger functionalities. e.g., ethyl or isopropyl, e.g., diisopropyl. For example, the substrate can be functionalized with a diisopropyl cyanopropylsilane compound.

In some embodiments, silanes of this disclosure contain functional groups that have steric properties permitting protection of the bonded silane from hydrolysis. The R and R₁ groups in the silanes may or may not be the same functional group. In particular embodiments, R and R₁ may be different sizes such that, because of steric factors, the silane is arranged on the surface of the substrate so as to provide increased access to the interacting species of interest. As a non-limiting example, R=methyl or isopropyl assists in stabilizing the silane against hydrolysis and R₁=C₈ provides a strong hydrophobic character to the stationary phase for reversed-phase chromatography. By appropriate manipulation of R and R₁ groups, it is feasible to prepare a material that minimizes the tendency of the stationary phase to denature, i.e., cause conformational changes to, biological molecules such as proteins. In addition, the steric hindrance offered by the R groups protects the siloxane bond, e.g., the bond between the silica particles and the monofunctional silane, from hydrolytic attack across a range of solvent/solution pH values. In some embodiments, the separation medium disclosed herein can resist degradation over a pH range from 1.0 to 8.0, e.g., from pH 1.0 to pH 3.0, from pH 2.0 to pH 4.0, from pH 3.0 to pH 5.0, from pH 4.0 to pH 6.0, from pH 5.0 to pH 7.0, or from pH 6.0 to pH 8.0, e.g., from pH 1.0, pH 1.5, pH 2.0, pH 2.5, pH 3.0, pH 3.5, pH 4.0, pH 4.5, pH 5.0, pH 5.5, pH 6.0, pH 6.5, pH 7.0, pH 7.5, or pH 8.0.

The silanes utilized to prepare the separation medium disclosed herein can include a variety of functional groups to fit the intended application. The functional groups are incorporated in the R₁ groups of the silane structure. For example, when the separation medium is intended for use in reversed-phase chromatography, R₁ of the silane may include alkyl or aryl groups such as C₃, C₄, *n*-C₈, and *n*-C₁₈, to enable the desired hydrophobic interaction for retention to occur. When the separation medium is intended for use in ion-exchange chromatography, the R₁ groups can include functionalities with ion-exchange abilities, for example, (CH₂)₃N⁺(CH₃)₃ as an anion-exchanger, and -(CH₂)₃-C₆H₄-SO₃H as a cation-exchanger. For size-exclusion chromatography, particularly for the separation of highly polar, water-soluble biomacromolecules such as proteins, the surface of the substrate can be modified with highly polar R₁ groups, such as -(CHz)s-O-CH(OH)-CHOH, the so-called "diol" functional group. For hydrophobic interaction chromatography, a weakly hydrophobic stationary phase is desired on the substrate. For example, R₁=methyl, ethyl, n-propyl, or isopropyl provide the modest hydrophobic interaction for this mode of chromatographic retention. In the case of normal-phase chromatography, polar functional groups are incorporated into the silane as R₁ groups, for example, -(CH₂)₃-NH₂ and - (CH₂)₃-CN.

For affinity chromatography support structures, the substrate can first be reacted with a monofunctional silane containing reactive R₁ -groups such as -(CH₂)₃-NH₂. These groups can then be further reacted with ligands of specific biological activity to produce the affinity support structure needed to perform the desired sing appropriately reactive R₁ -groups such as -(CH₂)₃-NH₂. These groups can then be further reacted with ligands of specific biological activity to produce the affinity support structure needed to perform the desired sing appropriately reactive R₁ groups such as -(CH₂)₃-NH₂. These groups can then be further reacted with ligands of specific biological activity to produce the affinity support structure needed to perform the desired sing appropriately reactive R₁ groups such as -(CH₂)₃-NH₂. These groups can then be further reacted with ligands of specific biological activity to produce the affinity support structure needed to perform the desired separation. If R₁ contains an epoxide group, the amino terminus of a protein or peptide, i.e., RNH₂, can be linked by direct reaction to form structures of the type: -CH(-OH)-CH₂-NHR. The epoxide also can be first hydrolyzed to form a "diol" group, and then activated with a variety of other reagents.

Sterically-protected monofunctional silane reagents also are used to prepare substrates that have uses as catalysts for liquid phase reaction. For use as acid or basic catalysts, strongly acidic sulfonic acids groups or strongly basic quaternary amines groups, respectively, can be incorporated in the silane structure in the same manner as described for the ion-exchange chromatography packings above. Ligands containing metals, such as platinum and palladium, either as an ion or in an organo-metallic complex, can be built into the substrates of this invention, for selective catalysts by oxidation or reduction.

In one embodiment, the substrate includes a monofunctional silane with diisopropyl side chain groups and a pendant cyano functional group, e.g., a reverse phase chromatography column including an immobilized cyano group on the stationary phase. Cyano groups include any compounds containing the group -CN. As disclosed herein, any suitable cyano group can be used as part of the functionalization reaction to add -CN to the surface of the substrate. Columns including CN groups include Agilent ZORBAX^{®} SB300-CN or Agilent InfinityLab POROSHELL^{®} 120 SB-CN.

In certain embodiments, the column can be a silica particle column with, for example, a pore size of about 50 Å to about 500 Å, e.g., about 80 Å or greater. In an embodiment, the pore size is between about 120 Å to about 300 Å in size. For example, a pore size of about 300 Å can be used. Examples of suitable silica columns include but are not limited to Agilent ZORBAX^{®} SB300-CN, or Agilent InfinityLab POROSHELL^{®} 120 SB-CN. The column can be heated and for example the temperature of the column can be between about 20°C and about 80°C, or about 40 °C to about 60 °C or about 50 °C.

The column used to house or contain the separation medium, e.g., silica particles, can be any suitable column of the appropriate diameter, length, and material. For example, the column may be made from a metallic material, such as stainless steel or another alloy with physical properties appropriate for chromatographic separations, e.g., solvent resistance, pressure resistance, and the like. Other suitable materials for chromatography columns are known in the art.

The dimensions of the column, i.e., inner diameter and length, can be chosen to effectuate different separation characteristics and liquid chromatographic instrument operational parameters. In general, shorter length columns reduce the run time of a separation experiment and reduce the retention time of specific analytes in a sample. In contrast, longer columns generally offer increased residence time and this increased resolution of chromatogram peaks for a given sample. The inner diameter of a chromatography column generally increases peak height response and can improve limits of detection and ability for quantification. Larger diameter columns permit greater sample loading and analysis of low percentage analytes, such as chemical degradation products. Smaller diameter columns can improve detection sensitivity for smaller sample volumes. These variables are typically balanced by solvent flow rate, operating pressure, and sample loading capacity, among other balancing factors.

In some embodiments, the column may have an inner diameter from about 1.0 mm to about 100 mm, e.g., about 1.0 mm to about 10 mm, about 1.2 mm to about 12 mm, about 1.4 mm to about 14 mm, about 1.6 mm to about 16 mm, about 1.8 mm to about 18 mm, about 2.0 mm to about 20 mm, about 2.2 mm to about 22 mm, about 2.4 mm to about 24 mm, about 2.6 mm to about 26 mm, about 2.8 mm to about 28 mm, about 3.0 mm to about 30 mm, about 3.2 mm to about 32 mm, about 3.4 mm to about 34 mm, about 3.6 mm to about 36 mm, about 3.8 mm to about 38 mm, about 4.0 mm to about 40 mm, about 5.2 mm to about 52 mm, about 5.4 mm to about 54 mm, about 5.6 mm to about 56 mm, about 5.8 mm to about 58 mm, about 6.0 mm to about 60 mm, about 6.2 mm to about 62 mm, about 6.4 mm to about 64 mm, about 6.6 mm to about 66 mm, about 6.8 mm to about 68 mm, about 7.0 mm to about 70 mm, about 7.2 mm to about 72 mm, about 7.4 mm to about 74 mm, about 7.6 mm to about 76 mm, about 7.8 mm to about 78 mm, about 8.0 mm to about 80 mm, about 8.2 mm to about 82 mm, about 8.4 mm to about 84 mm, about 8.6 mm to about 86 mm, about 8.8 mm to about 88 mm, about 9.0 mm to about 90 mm, about 9.2 mm to about 92 mm, about 9.4 mm to about 94 mm, about 9.6 mm to about 96 mm, about 9.8 mm to about 98 mm, or about 10.0 mm to about 100 mm.

In some embodiments, the column may have an inner diameter of about 1.0 mm, about 1.2 mm, about 1.4 mm, about 1.6 mm, about 1.8 mm, about 2.0 mm, about 2.2 mm, about 2.4 mm, about 2.6 mm, about 2.8 mm, 3.0 mm, about 3.2 mm, about 3.4 mm, about 3.6 mm, about 3.8 mm, about 4.0 mm, about 4.2 mm, about 4.4 mm, about 4.6 mm, about 4.8 mm, about 5.0 mm, about 5.2 mm, about 5.4 mm, about 5.6 mm, about 5.8 mm, about 6.0 mm, about 6.2 mm, about 6.4 mm, about 6.6 mm, about 6.8 mm, about 7.0 mm, about 7.2 mm, about 7.4 mm, about 7.6 mm, about 7.8 mm, about 8.0 mm, about 8.2 mm, about 8.4 mm, about 8.6 mm, about 8.8 mm, about 9.0 mm, about 9.2 mm, about 9.4 mm, about 9.6 mm, about 9.8 mm, about 10 mm, about 12 mm, about 14 mm, about 16 mm, about 18 mm, about 20 mm, about 22 mm, about 24 mm, about 26 mm, about 28 mm, 30 mm, about 32 mm, about 34 mm, about 36 mm, about 38 mm, about 40 mm, about 42 mm, about 44 mm, about 46 mm, about 48 mm, about 50 mm, about 52 mm, about 54 mm, about 56 mm, about 58 mm, about 60 mm, about 62 mm, about 64 mm, about 66 mm, about 68 mm, about 70 mm, about 72 mm, about 74 mm, about 76 mm, about 78 mm, about 80 mm, about 82 mm, about 84 mm, about 86 mm, about 88 mm, about 90 mm, about 92 mm, about 94 mm, about 96 mm, about 98 mm, or about 100 mm. In specific embodiments, the column has an inner diameter of about 4.6 mm. In certain embodiments, the column has an inner diameter of about 2.1 mm.

In some embodiments, the column may have a length from about 10 mm to about 250 mm, e.g., about 10 mm to about 25 mm, about 15 mm to about 40 mm, about 20 mm to about 50 mm, about 25 mm to about 55 mm, about 30 mm to about 60 mm, about 35 mm to about 70 mm, about 40 mm to about 75 mm, about 50 mm to about 85 mm, about 60 mm to about 100 mm, about 75 mm to about 115 mm, about 85 mm to about 125 mm, about 100 mm to about 150 mm, about 125 mm to about 175 mm, about 140 mm to about 190 mm, about 150 mm to about 200 mm, about 175 mm to about 225 mm, about 190 mm to about 230 mm, or about 200 mm to about 250 mm.

In some embodiments, the column may have a length of about 10 mm, about 15 mm, about 20 mm, about 25 mm, about 30 mm, about 35 mm, about 40 mm, about 45 mm, about 50 mm, about 55 mm, about 60 mm, about 65 mm, about 70 mm, about 75 mm, about 80 mm, about 85 mm, about 90 mm, about 95 mm, about 100 mm, about 110 mm, about 115 mm, about 120 mm, about 125 mm, about 130 mm, about 135 mm, about 140 mm, about 145 mm, about 150 mm, about 155 mm, about 160 mm, about 165 mm, about 170 mm, about 175 mm, about 180 mm, about 185 mm, about 190 mm, about 195 mm, about 200 mm, about 210 mm, about 215 mm, about 220 mm, about 225 mm, about 230 mm, about 235 mm, about 240 mm, about 245 mm, or about 250 mm. In specific embodiments, the column has a length of about 50 mm. In specific embodiments, the column has a length of about 100 mm. In certain embodiments, the column has a length of about 150 mm.

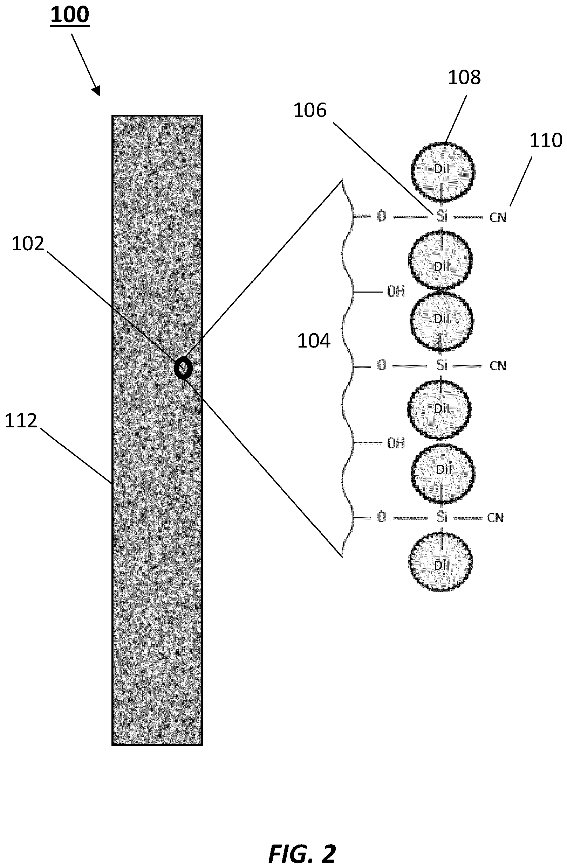

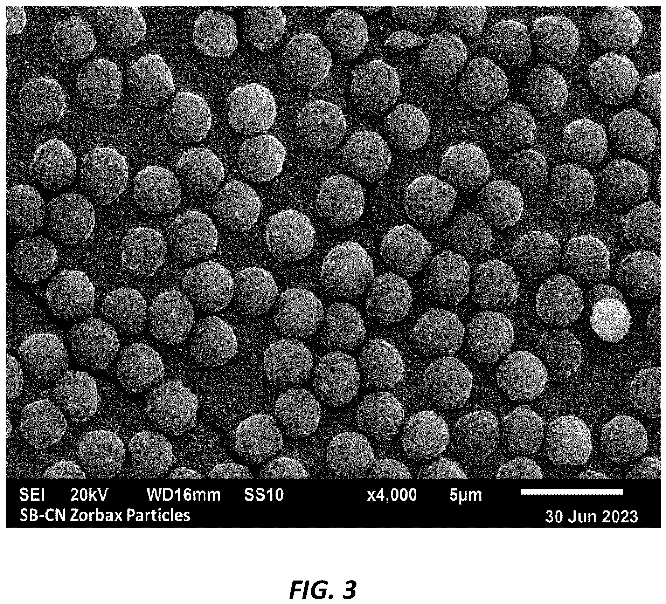

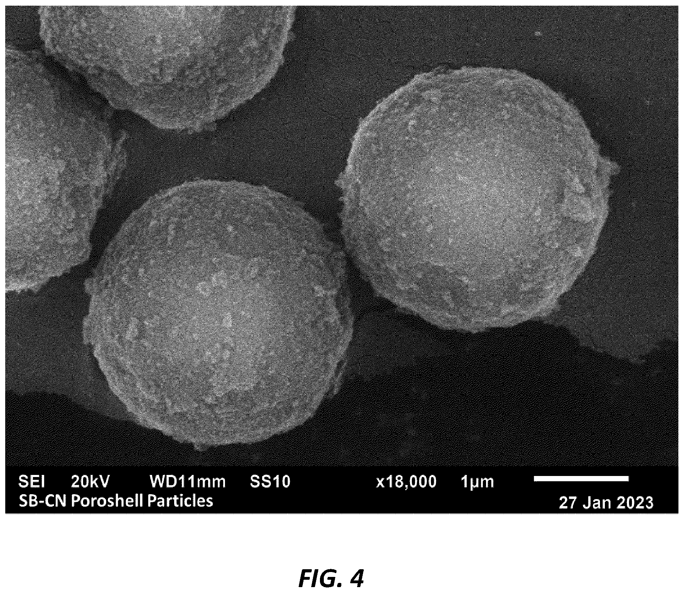

An embodiment of a chromatographic separation column is illustrated in FIG. 2. As illustrated, chromatographic separation column 100 includes a separation medium 102 disposed within a column 112. The separation medium 102 includes a particulate porous substrate 104, such as porous silica particles, that have been modified to provide a functionalized surface. The functionalized surface of the particulate porous substrate 104 includes a monofunctional silane 106 that includes diisopropyl side chain groups 108 and a pendant cyano functional group 110. The porous substrate 104 has a pore size of about 50 Å to about 500 Å and an average particle size of about 1.0 µm to about 100 µm. In specific embodiments, porous substrate 104 has a pore size of 300 Å and a particle size of 3.5 µm. SEM images of 1.8 µm 300 Å pore diameter particle and 2.7 µm 120 Å pore diameter particles of a chemically stable, densely covered, sterically protected, diisopropyl cyanopropylsilane stationary phase are illustrated in FIGS. 3 and 4. Column 112 has an inner diameter of about 1.0 to 100 mm and a length from about 10 mm to about 250 mm. In specific embodiments, the column has a length of about 50 mm. In specific embodiments, the column has a length of about 100 mm. In certain embodiments, the column has a length of about 150 mm. In operation, the chromatographic separation column 100 can be installed into a chromatographic instrument and a sample including a surfactant, e.g., polysorbate 80, e.g., polysorbate 80 mono-, di-, tri-, and tetra-esters, and one or more reaction products can be directed into the chromatographic separation column 100 for separation of the one or more components of the sample.

The various components in the surfactant sample can be separated using any suitable elution solvent or solvents under either isocratic of gradient elution conditions. As a non-limiting example, for a polysorbate 80 sample which includes a mix of polysorbate 80, e.g., polysorbate 80 mono-, di-, tri-, and tetra-esters, and one or more reaction products of polysorbate 80 including, but not limited to, long chain fatty acids, short chain fatty acids, polyoxyethylene, polyoxyethylene sorbitan, aldehydes, ketones, formic acid, acetic acid, or peroxides, separation can be performed using a gradient separated mobile phase. The mobile phase can include one or more of ammonium acetate, ammonium formate, ammonia, formic acid, acetic acid, trifluoroacetic acid, methanol, isopropanol, acetonitrile, ethanol, and acetone. The solvents for the mobile phase can be chosen to optimize separation of one or more components of a sample including polysorbate 80, e.g., polysorbate 80 mono-, di-, tri-, and tetra-esters, and one or more reaction products of polysorbate 80. In one non-limiting embodiment, a gradient separated mobile phase with one phase being a 0.1% to about 10% mixture of an acid or ammonium acetate in water. The acid can be selected from trifluoroacetic acid (TFA), formic acid, acetic acid, or difluoroacetic acid. The other phase can be a solvent including one or more of methanol, isopropanol, or acetonitrile. In another non-limiting embodiment, a gradient separated mobile phase may be a mixture of 10 mM ammonium acetate and methanol. In another non-limiting embodiment, a gradient separated mobile phase may be a mixture of 0.1% TFA in water and methanol. Other solvent gradients are within the scope of this disclosure and this disclosure is in no way limited by the choice of solvent and if the separation is performed under isocratic or gradient separation conditions.

In accordance with an aspect, there is provided a method of characterizing polysorbate 80. The method includes preparing a sample comprising polysorbate 80 and one or more reaction products of polysorbate 80. The method includes injecting the sample onto a chromatographic separation column. The chromatographic separation column includes a separation medium including a particulate porous substrate having a monofunctional silane with diisopropyl side chain groups and a pendant cyano functional group. The porous substrate has a pore size of about 50 Å to about 500 Å and an average particle size of about 1.0 µm to about 100 µm. The column has an inner diameter of about 1.0 mm to about 100 mm and a length from about 10 mm to about 250 mm. The method further includes eluting the polysorbate 80 and the one or more reaction products of polysorbate 80 using a gradient mobile phase such that the polysorbate 80 and the one or more reaction products of polysorbate 80 are resolved with a resolution of at least three.

In certain embodiments, the polysorbate 80 and the one or more reaction products of polysorbate 80 are resolved with a resolution of at least five.

In some embodiments, the particulate porous substrate has a pore size of about 300 Å and an average particle size of about 3.5 µm. In some embodiments, the column has an inner diameter of about 2.1 mm and a length of about 50 mm. In some embodiments, the column has an inner diameter of about 2.1 mm and a length of about 100 mm. In some embodiments, the column has an inner diameter of about 2.1 mm and a length of about 150 mm.

In further embodiments, the column has an inner diameter of about 4.6 mm and a length of about 50 mm.

In some embodiments, the gradient mobile phase comprises ammonium acetate, e.g., 10 mM ammonium acetate, and methanol.

In some embodiments, the elution of the polysorbate 80 and the one or more reaction products of polysorbate 80 occurs in less than 10 minutes, e.g., less than 10 minutes, less than 9.5 minutes, less than 9 minutes, 8.5 minutes, less than 8 minutes, 7.5 minutes, less than 7 minutes, 6.5 minutes, less than 6 minutes, 5.5 minutes, less than 5 minutes, 4.5 minutes, less than 4 minutes, 3.5 minutes, less than 3 minutes, 2.5 minutes, less than 2 minutes, 1.5 minutes, or less than 1 minute.

In accordance with an aspect, there is provided a method of facilitating characterization of polysorbate 80. The method includes providing a sample comprising polysorbate 80, e.g., polysorbate 80 mono-, di-, tri-, and tetra-esters, and one or more reaction products of polysorbate 80. The method also includes providing a chromatographic separation column. The chromatographic separation column may include a separation medium including a particulate porous substrate having a monofunctional silane with diisopropyl side chain groups and a pendant cyano functional group. The porous substrate has a pore size of about 50 to about 500 Å and an average particle size of about 1.0 µm to about 100 µm. The chromatographic separation column also includes a column constructed and arranged to hold the separation medium. The column has an inner diameter of about 1.0 to 100 mm and a length from about 10 mm to about 250 mm.

In some embodiments, the porous substrate of the provided chromatographic separation column includes silica. In some embodiments, the porous substrate of the provided chromatographic separation column has a particle size of about 3.5 µm. In some embodiments, the porous substrate of the provided chromatographic separation column has a pore size of about 300 Å.

In some embodiments, the inner diameter of the provided chromatographic separation column method is about 2.1 mm. In some embodiments, the length of the provided chromatographic separation column is about 50 mm. In some embodiments, the length of the provided chromatographic separation column is about 100 mm. In some embodiments, the length of the provided chromatographic separation column is about 150 mm.

In some embodiments, the provided sample may include polysorbate 80, e.g., polysorbate 80 mono-, di-, tri-, and tetra-esters, one or more long chain fatty acids, short chain fatty acids, polyoxyethylene, polyoxyethylene sorbitan, aldehydes, ketones, formic acid, acetic acid, and peroxides.

In further embodiments, the method includes installing the chromatographic separation column into a liquid chromatographic instrument.

In further embodiments, the method includes providing a mobile phase to effectuate separation of the polysorbate, e.g., polysorbate 80 mono-, di-, tri-, and tetra-esters, and the one or more reaction products of polysorbate 80. The mobile phase may include, for example, one or both of ammonium acetate, e.g., 10 mM ammonium acetate, and methanol.

In further embodiments, the method includes providing instructions for a gradient-based separation using the mobile phase.

### EXAMPLES

The function and advantages of these and other embodiments can be better understood from the following examples. These examples are intended to be illustrative in nature and are not considered to be in any way limiting the scope of the invention.

### Example 1 - Effects of Buffer Chemistry

In this example, the effects of different buffers on the resolution, peak width, and peak height was explored using HPLC for the separation of a mixture of oleic acid and polysorbate 80.

The instrumentation used in this example was an Agilent 1290 Infinity II HPLC system equipped with a 1290 Infinity II Evaporative Light Scattering Detector (ELSD). The HPLC autosampler was kept at room temperature (23 °C). For the ELSD, the evaporator temperature was 50 °C, the nebulizer temperature: 50 °C, the gas flow rate was 1 standard liter per minute (SLM). The output data rate was 80 Hz and data smoothing was 3.0 seconds. The sample was 5 ppm oleic acid and 20 ppm polysorbate 80 mixed and dissolved in a solution of 90:10 water: methanol (v/v).

The mobile phase was two components, with mobile phase A being either 0.1% trifluoroacetic acid (TFA) in water or 10 mM ammonium acetate in water and mobile phase B being methanol, with a gradient being used during the sample run. The overall sample runs were 10 minutes long and the mobile phase gradient composition as a function of time is specified in Table 1. The flow rate was set at 0.25 mL/min and a sample injection volume of 20 µL. The temperature of the column was 50 °C. The column used for this example included an Agilent ZORBAX^{®} SB-CN, 2.1 mm x 50 mm, 3.5 µm particle size with 300 Å pores. The column pressure was 201 bar.

**Table 1. Gradient Composition for Example 1**

| **Time (min)** | **% Methanol** |
|---|---|
| 0 | 0 |
| 0.2 | 0 |
| 0.6 | 50 |
| 1.5 | 50 |
| 5.1 | 95 |
| 5.7 | 95 |
| 5.8 | 0 |
| 10 | 0 |

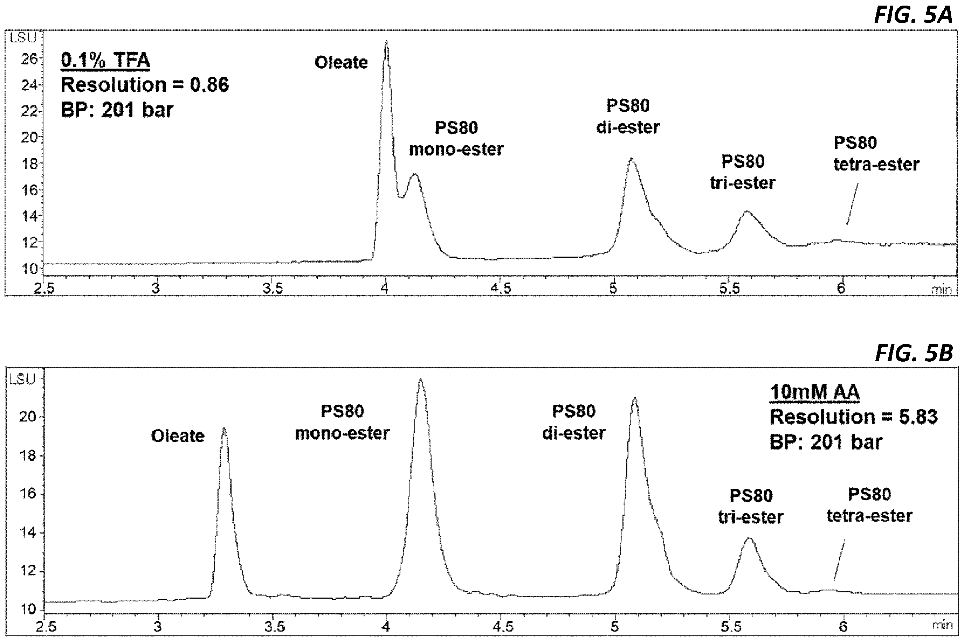

Individual chromatographic traces for the separation of the 5 ppm oleic acid and 20 ppm polysorbate 80 mixture using 0.1% TFA and 10 mM ammonium acetate are illustrated in FIGS. 5A and 5B, respectively. As illustrated, switching buffer from 0.1% TFA (FIG. 5A) to 10 mM ammonium acetate (FIG. 5B) significantly increases the resolution between the two main monomer peaks, i.e., oleate and PS80 monoester.

### Example 2- Effects of Particle Pore Size

In this example, the effects of separation medium pore size on the resolution, peak width, and peak height was explored using HPLC for the separation of a mixture of oleic acid and polysorbate 80.

The instrumentation used in this example was an Agilent 1290 Infinity II HPLC system equipped with a 1290 Infinity II Evaporative Light Scattering Detector (ELSD). The HPLC autosampler was kept at room temperature (23 °C). For the ELSD, the evaporator temperature was 50 °C, the nebulizer temperature: 50 °C, the gas flow rate was 1 standard liter per minute (SLM). The output data rate was 80 Hz and data smoothing was 3.0 seconds. The sample was 5 ppm oleic acid and 20 ppm polysorbate 80 mixed and dissolved in a solution of 90:10 water: methanol (v/v).

The mobile phase was two components, with mobile phase A being 10 mM ammonium acetate in water and mobile phase B being methanol, with a gradient being used during the sample run. The overall sample runs were 10 minutes long and the mobile phase gradient composition as a function of time was as specified in Table 1 of Example 1. The flow rate was set at 0.60 mL/min and a sample injection volume of 20 µL. The temperature of the column was 50 °C. The columns used for this example included an Agilent ZORBAX^{®} SB-CN, 4.6 mm x 50 mm, 3.5 µm particle size with 80 Å pores and an Agilent ZORBAX^{®} SB-CN, 4.6 mm x 50 mm, 3.5 µm particle size with 300 Å pores. The pressure on each column was, respectively, 95 bar and 104 bar.

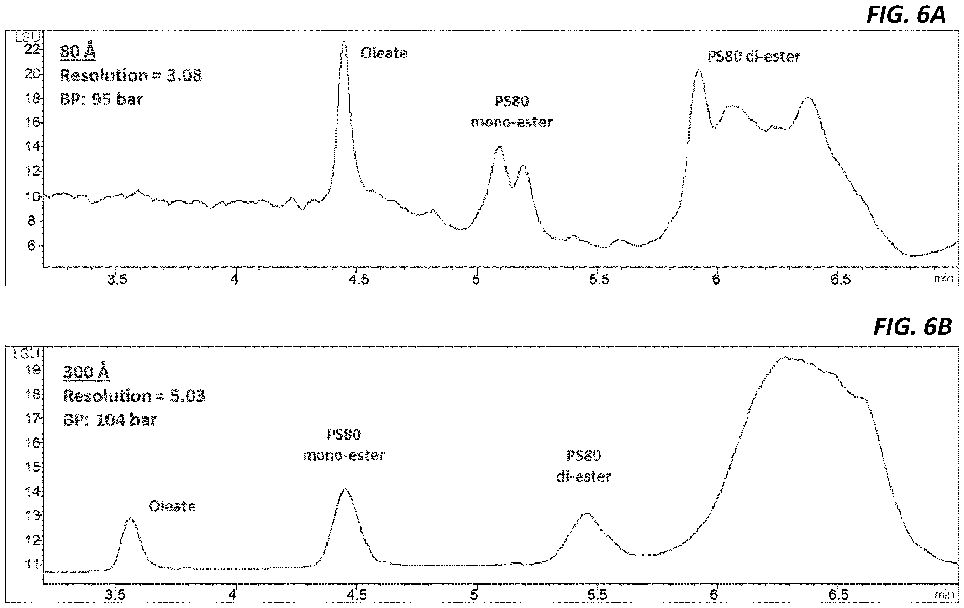

Individual chromatographic traces for the separation of the 5 ppm oleic acid and 20 ppm polysorbate 80 mixture using the ZORBAX^{®} SB-CN columns with particles having 80 Å pores and 300 Å pores are illustrated in FIGS. 6A and 6B, respectively. As illustrated, columns having the larger 300 Å pore sizes (FIG. 6B) compared to the smaller 80 Å pore sizes (FIG. 6A) performed better for the separation of the two main monomer peaks, i.e., oleate and PS80 monoester, as evidenced by the improved peak shapes, lower baseline noise, and greater resolution (3.08 vs 5.03) between the two species.

### Example 3 - Effects of Particle Size

In this example, the effects of particle size on resolution, peak width, and peak height was explored using HPLC columns having two different particle sizes for the separation of a mixture of oleic acid and polysorbate 80.

The instrumentation used in this example was an Agilent 1290 Infinity II HPLC system equipped with a 1290 Infinity II Evaporative Light Scattering Detector (ELSD). The HPLC autosampler was kept at room temperature (23 °C). For the ELSD, the evaporator temperature was 50 °C, the nebulizer temperature: 50 °C, the gas flow rate was 1 standard liter per minute (SLM). The output data rate was 80 Hz and data smoothing was 3.0 seconds. The sample was 5 ppm oleic acid and 20 ppm polysorbate 80 mixed and dissolved in a solution of 90:10 water: methanol (v/v).

The mobile phase was two components, with mobile phase A being 10 mM ammonium acetate in water and mobile phase B being methanol, with a gradient being used during the sample run. The overall sample runs were 10 minutes long and the mobile phase gradient composition as a function of time was as specified in Table 1 of Example 1. The flow rate was set at 0.25 mL/min and a sample injection volume of 20 µL. The temperature of the column was 50 °C. The columns used for this example included an Agilent ZORBAX^{®} SB-CN, 2.1 mm x 50 mm, 3.5 µm particle size with 300 Å pores and an Agilent ZORBAX^{®} SB-CN, 2.1 mm x 50 mm, 1.8 µm particle size with 300 Å pores. The pressure on each column was, respectively, 75 bar and 201 bar.

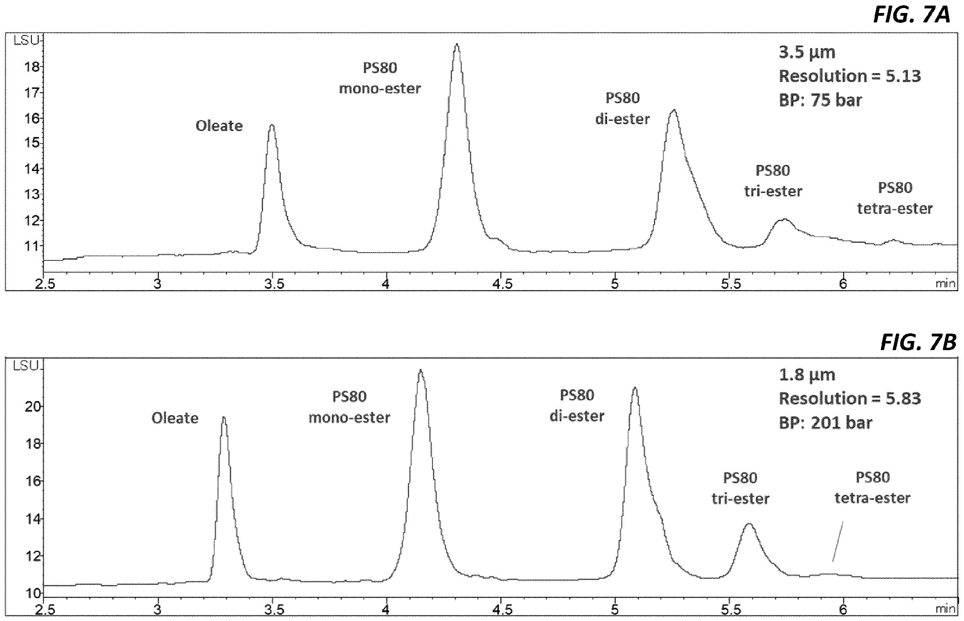

Individual chromatographic traces for the separation of the 5 ppm oleic acid and 20 ppm polysorbate 80 mixture using the ZORBAX^{®} SB-CN columns with 3.5 µm particles and 1.8 µm particles are illustrated in FIGS. 7A and 7B, respectively. As illustrated, both columns performed comparably for the separation of the two main monomer peaks, i.e., oleate and PS80 monoester, as evidenced by the substantially similar peak shapes, baseline noise, and resolution (5.13 vs 5.08) between the two species, with the smaller particles exhibiting slightly better performance. This is further evidenced by the data presented in Tables 2 and 3 for the retention time, peak width, and peak area for the two particle sizes. As seen in Tables 2 and 3, while both particle sizes performed comparably on the whole, the 1.8 µm 300 Å particles yielded slightly narrower peaks and slightly better sensitivity than 3.5 µm 300 Å particles. These results confirmed the ability of the 1.8 µm particles bonded with cyanosilane residues to fully separate all the major polysorbate subspecies and individual degradant products, and in particular, clearly separating polysorbate 80 from oleic acid, using a short 50 mm column with a sub-10 minute chromatographic run.

**Table 2. Performance Data for 3.5 µm 300 Å ZORBAX^{®} Particles in 2.1 mm × 50 mm Columns**

| **Species** | **Retention Time (min)** | **Width** | **Area** |
|---|---|---|---|
| Oleate | 3.498 | 0.0785 | 30.30 |
| PS80 mono | 4.308 | 0.1071 | 61.57 |
| PS80 di | 5.258 | 0.1454 | 52.65 |
| PS80 tri | 5.741 | 0.1523 | 12.15 |

**Table 3. Performance Data for 1.8 µm 300 Å ZORBAX^{®} Particles in 2.1 mm x 50 mm Columns**

| **Species** | **Retention Time (min)** | **Width** | **Area** |
|---|---|---|---|
| Oleate | 3.288 | 0.0675 | 41.20 |
| PS80 mono | 4.149 | 0.1058 | 82.80 |
| PS80 di | 5.086 | 0.1077 | 81.43 |
| PS80 tri | 5.586 | 0.1115 | 21.92 |

### Example 4 - Effects of Column Length

In this example, the effects of column length on resolution, peak width, and peak height for the separation of a mixture of oleic acid and polysorbate 80 was explored.

The instrumentation used in this example was an Agilent 1290 Infinity II HPLC system equipped with a 1290 Infinity II Evaporative Light Scattering Detector (ELSD). The HPLC autosampler was kept at room temperature (23 °C). For the ELSD, the evaporator temperature was 50 °C, the nebulizer temperature: 50 °C, the gas flow rate was 1 standard liter per minute (SLM). The output data rate was 80 Hz and data smoothing was 3.0 seconds. The sample was 5 ppm oleic acid and 20 ppm polysorbate 80 mixed and dissolved in a solution of 90:10 water: methanol (v/v).

The mobile phase was two components, with mobile phase A being 10 mM ammonium acetate in water and mobile phase B being methanol, with a gradient being used during the sample run. The columns used for this example included an Agilent ZORBAX^{®} SB-CN, 2.1 mm x 50 mm, 3.5 µm particle size with 300 Å pores and an Agilent ZORBAX^{®} SB-CN, 2.1 mm x 150 mm, 3.5 µm particle size with 300 Å pores. The pressure on each column was, respectively, 75 bar and 163 bar. Due to the differences in column length, the overall run time and the mobile phase gradient was different for each column. For the 50 mm length column, run time was 10 minutes and the mobile phase gradient composition as a function of time is as specified in Table 1 of Example 1. For the 150 mm length column, the run time was 15 minutes and the mobile phase gradient composition as a function of time is given in Table 4. For both columns, the flow rate was set at 0.25 mL/min and a sample injection volume of 20 µL. The temperature of the columns was 50 °C.

**Table 4. Gradient Composition for the 150 mm length ZORBAX^{®} Column**

| **Time (min)** | **% Methanol** |
|---|---|
| 0 | 50 |
| 3 | 50 |
| 8 | 95 |
| 10 | 95 |
| 12 | 50 |
| 15 | 50 |

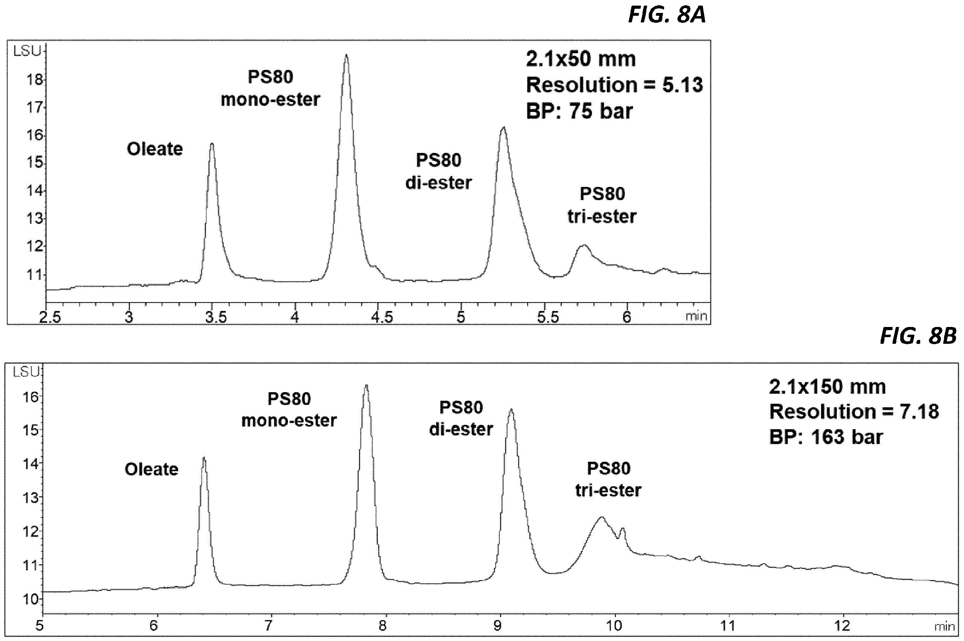

Individual chromatographic traces for the separation of the 5 ppm oleic acid and 20 ppm polysorbate 80 mixture using the ZORBAX^{®} SB-CN columns with lengths of 50 mm and 150 mm are illustrated in FIGS. 8A and 8B, respectively. As illustrated, the longer 150 mm column (FIG. 8B) performed better than the shorter 50 mm column (FIG. 8A), displaying better peak resolution (7.18 vs 5.13) for the two species.

### Example 5 - Effects of Particle Type and Size

In this example, the effects of particle size on resolution, peak width, and peak height was explored using HPLC columns having superficially porous particles of two different sizes for the separation of a mixture of oleic acid and polysorbate 80. Superficially porous particles have a solid core surrounded by a thin, porous shell rather than porous throughout the entire particle. These types of particles generally exhibit improved separation speed as the diffusion of materials through the particle is limited and can be loaded at higher pressure.

The instrumentation used in this example was an Agilent 1290 Infinity II HPLC system equipped with a 1290 Infinity II Evaporative Light Scattering Detector (ELSD). The HPLC autosampler was kept at room temperature (23 °C). For the ELSD, the evaporator temperature was 50 °C, the nebulizer temperature: 50 °C, the gas flow rate was 1 standard liter per minute (SLM). The output data rate was 80 Hz and data smoothing was 3.0 seconds. The sample was 5 ppm oleic acid and 20 ppm polysorbate 80 mixed and dissolved in a solution of 90:10 water: methanol (v/v).

The mobile phase was two components, with mobile phase A being 10 mM ammonium acetate in water and mobile phase B being methanol, with a gradient being used during the sample run. The overall sample runs were 10 minutes long and the mobile phase gradient composition as a function of time specified in Table 1 of Example 1. The flow rate was set at 0.25 mL/min and a sample injection volume of 20 µL. The temperature of the column was 50 °C. The columns used for this example included an Agilent POROSHELL^{®} SB-CN, 2.1 mm x 50 mm, 2.7 µm particle size with 120 Å pores and an Agilent POROSHELL^{®} SB-CN, 2.1 mm x 50 mm, 1.9 µm particle size with 120 Å pores. The pressure on each column was, respectively, 177 bar and 201 bar.

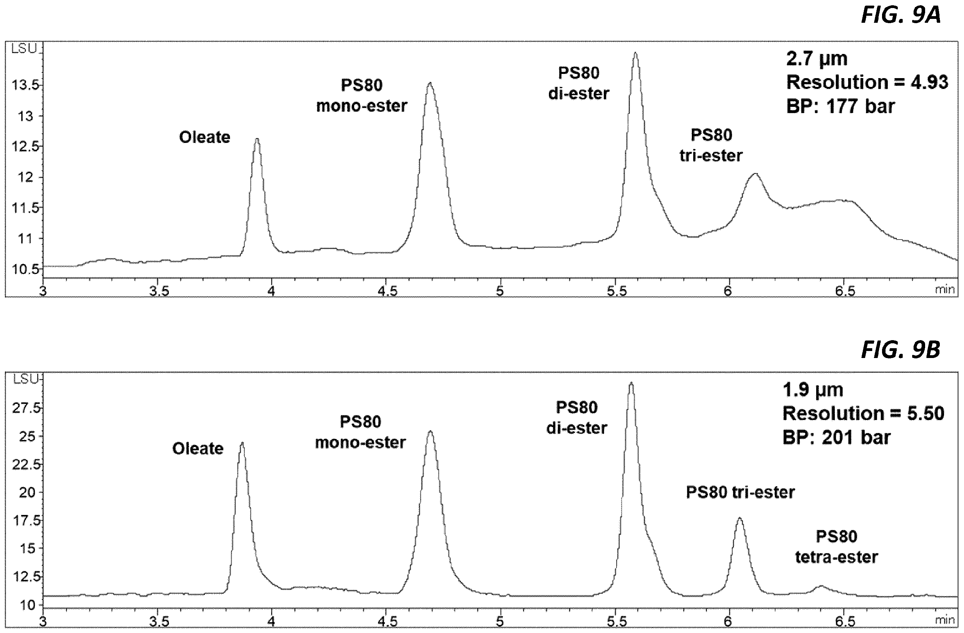

Individual chromatographic traces for the separation of the 5 ppm oleic acid and 20 ppm polysorbate 80 mixture using the POROSHELL^{®} SB-CN columns with 2.7 µm particles and 1.9 µm particles are illustrated in FIGS. 9A and 9B, respectively. As illustrated, both columns performed comparably compared to each other for the separation of the two main monomer peaks, i.e., oleate and PS80 monoester, as evidenced by the substantially similar peak shapes, baseline noise, and resolution (5.50 vs 4.93) between the two species, with the smaller particles exhibiting slightly better performance. In addition, the POROSHELL^{®} particles of both sizes performed comparably to similarly sized ZORBAX^{®} particles as illustrated in FIGS. 5A and 5B. This is further evidenced by the data presented in Tables 5 and 6 for the retention time, peak width, and peak area for the two particle sized. As seen in Tables 5 and 6, while both particle sizes performed comparably on the whole, the 1.9 µm 120 Å POROSHELL^{®} particles yielded slightly narrower peaks than the 2.7 µm 120 Å POROSHELL^{®} particles in the later eluting compounds. These results suggested that the POROSHELL^{®} particles could be used as an alternative particle to the ZORBAX^{®} particles in specific situation, such as where a higher loading pressure may be advantageous.

**Table 5. Performance Data for 2.7 µm 120 Å POROSHELL^{®} Particles in 2.1 mm × 50 mm Columns**

| **Species** | **Retention Time (min)** | **Width** | **Area** |
|---|---|---|---|
| Oleate | 3.933 | 0.0659 | 12.03 |
| PS80 mono | 4.690 | 0.1218 | 31.21 |
| PS80 di | 5.588 | 0.097 | 30.13 |
| PS80 tri | 6.112 | 0.1208 | 8.97 |

**Table 6. Performance Data for 1.9 µm 120 Å POROSHELL^{®} Particles in 2.1 mm x 50 mm Columns**

| **Species** | **Retention Time (min)** | **Width** | **Area** |
|---|---|---|---|
| Oleate | 3.869 | 0.0748 | 18.26 |
| PS80 mono | 4.691 | 0.1019 | 28.87 |
| PS80 di | 5.569 | 0.0888 | 32.63 |
| PS80 tri | 6.045 | 0.0793 | 10.58 |

The phraseology and terminology used herein is for the purpose of description and should not be regarded as limiting. As used herein, the term "plurality" refers to two or more items or components. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of" and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Having thus described several aspects of at least one embodiment, it is to be appreciated various alterations, modifications, and improvements will readily occur to those skilled in the art. Any feature described in any embodiment may be included in or substituted for any feature of any other embodiment. Such alterations, modifications, and improvements are intended to be part of this disclosure and are intended to be within the scope of the invention. Accordingly, the foregoing description and drawings are by way of example only.

Those skilled in the art should appreciate that the parameters and configurations described herein are exemplary and that actual parameters and/or configurations will depend on the specific application in which the disclosed methods and materials are used. Those skilled in the art should also recognize or be able to ascertain, using no more than routine experimentation, equivalents to the specific embodiments disclosed.

## Claims

1. A chromatographic separation column for characterizing surfactant and/or surfactant purity, comprising,
a separation medium comprising a particulate porous substrate having a monofunctional silane with diisopropyl side chain groups and a pendant cyano functional group, the porous substrate having a pore size of about 50 Å to about 500 Å and an average particle size of about 1.0 µm to about 100 µm; and
a column constructed and arranged to hold the separation medium, the column having an inner diameter of about 1.0 to 100 mm and a length from about 10 mm to about 250 mm.

2. The column of claim 1, wherein the surfactant to be characterized comprises a non-ionic surfactant, wherein the non-ionic surfactant preferably comprises polysorbate-80.

3. The column of claim 1 or 2, wherein the porous substrate comprises a hydrated metal oxide, a hydrated metalloid-oxide, or organic polymer, wherein the porous substrate preferably comprises silica.

4. The column of any one of claims 1 to 3, wherein the porous substrate has a particle size of about 3.5 µm.

5. The column of any one of claims 1 to 4, wherein the porous substrate has a pore size of about 300 Å.

6. The column of any one of claims 1 to 5, wherein the inner diameter of the column is 2.1 mm.

7. The column of any one of claims 1 to 6, wherein the length is about 50 mm to 150 mm.

8. The column of any one of claims 1 to 7, wherein the separation medium can resist degradation over a pH range from 1.0 to 8.0 and/or can be used in a temperature range of about 20 to 80 °C.

9. The column of any one of claims 1 to 8, wherein the column can be used at an operating pressure up to about 400 bar.

10. A method of facilitating characterization of polysorbate 80, comprising:
providing a sample comprising polysorbate 80 and one or more reaction products of polysorbate 80; and
providing a chromatographic separation column as defined in any one of claims 1 to 9.

11. The method of claim 10, wherein the one or more reaction products of polysorbate 80 includes one or more of long chain fatty acids, short chain fatty acids, polyoxyethylene, polyoxyethylene sorbitan, aldehydes, ketones, formic acid, acetic acid, and peroxides.

12. The method of any one of claims 10 to 11, further comprising installing the chromatographic separation column into a liquid chromatographic instrument, preferably further comprising providing a mobile phase to effectuate separation of the polysorbate 80 and the one or more reaction products of polysorbate 80, wherein the mobile phase comprises one or more of ammonium acetate, ammonium formate, ammonia, formic acid, acetic acid, trifluoroacetic acid, methanol, isopropanol, acetonitrile, ethanol, and acetone, and optionally further comprising providing instructions for a gradient-based separation using the mobile phase.

13. A method of characterizing polysorbate 80, comprising:
preparing a sample comprising polysorbate 80 and one or more reaction products of polysorbate 80;
injecting the sample into a chromatographic separation column as defined in any one of claims 1 to 9; and
eluting the polysorbate 80 and the one or more reaction products of polysorbate 80 using a gradient mobile phase such that the polysorbate 80 and the one or more reaction products of polysorbate 80 are resolved with a resolution of at least three.

14. The method of claim 13, wherein the polysorbate 80 and the one or more reaction products of polysorbate 80 are resolved with a resolution of at least five.

15. The method of claim 13 or 14, wherein the gradient mobile phase comprises ammonium acetate and methanol, wherein the elution of the polysorbate 80 and the one or more reaction products of polysorbate 80 preferably occurs in less than 10 minutes.
